# EUROPÄISCHE PATENTSCHRIFT

(11) **EP 3 621 901 B1**
(45) Veröffentlichungstag und Bekanntmachung des Hinweises auf die Patenterteilung: **07.12.2022**
(21) Anmeldenummer: 18743398.2
(22) Anmeldetag: 21.06.2018
(51) Int. Cl.: B65G 17/06, B65G 17/34

(54) **FÖRDEREINRICHTUNG MIT ZWEI FÖRDERWAGEN UND ABDECKUNG ZUM ABDECKEN EINES ZWISCHENRAUMS ZWISCHEN DEN ZWEI FÖRDERWAGEN**
CONVEYING DEVICE HAVING TWO CONVEYING CARTS AND COVER FOR COVERING A SPACE BETWEEN THE TWO CONVEYING CARTS
DISPOSITIF DE TRANSPORT AVEC DEUX CHARIOTS DE TRANSPORT ET CARÉNAGE POUR RECOUVRIR UN ESPACE INTERMÉDIAIRE ENTRE LES CHARIOTS DE TRANSPORT

(30) Priorität: 30.06.2017 DE 102017006213
(43) Veröffentlichungstag der Anmeldung: 18.03.2020
(73) Patentinhaber: Interroll Holding AG, 6592 Sant' Antonino (CH)
(72) Erfinder: KÄSER, Uwe, 74889 Sinsheim (DE); DROSTE, Heinrich, 74889 Sinsheim (DE)
(74) Vertreter: Kohlhof, Stephan
(86) Internationale Anmeldenummer: PCT/EP2018/066550
(87) Internationale Veröffentlichungsnummer: WO 2019/002079

(56) Entgegenhaltungen:
- EP-A1- 3 159 288
- EP-A2- 1 041 019
- FR-A1- 3 011 537
- US-A1- 2013 019 773

## Beschreibung

Die Erfindung betrifft eine Fördereinrichtung mit mindestens zwei Förderwagen und eine Abdeckung zum Abdecken eines Zwischenraums zwischen den zwei Förderwagen.

Bei einer solche Fördereinrichtung werden die Förderwagen mit einem quer zur Förderrichtung angeordneten und antreibbaren Fördergurt ausgestattet und bevorzugt als umlaufende Wagenketten in Quergurt-Sortern (Crossbelt-Sortern bzw. Quergurtförderern) eingesetzt, um Stückgüter zur Hochleistungsverteilung in Post- und Distributionszentren aufzunehmen und zu befördern. Bei einer herkömmlichen Fördereinrichtung, bei der zwei bekannte Förderwagen in Förderrichtung hintereinander angeordnet und derart voneinander beabstandet sind, dass ein Zwischenraum zwischen den beiden Förderwagen gebildet ist, ist es üblich, eine Abdeckung zum Abdecken des Zwischenraums vorzusehen. Diese Abdeckung soll verhindern, dass Fördergut von einem Förderwagen und durch den Zwischenraum fällt und so ein Schaden an dem Fördergut, dem Förderwagen und/oder der Fördereinrichtung entstehen kann. Insbesondere bei einem mit einem Quergurtförderer ausgerüsteten Förderwagen in der Fördereinrichtung werden die besonderen Anforderungen dieser Konfiguration an eine nahezu vollständige Abdeckung des Zwischenraums bei zuverlässigem Betrieb des Quergurtförderers bei den herkömmlichen Fördereinrichtung bzw. Abdeckungen nicht ausreichend berücksichtigt, beispielsweise bei einer Horizontalkurvenfahrt der Förderwagen und einem Quergurtförderer mit einem mittels Laufrollen abgestützten Quergurt. Ferner besteht bei Kurvenfahrt die Gefahr, dass sich der Quergurt durch das Gewicht des darauf gelagerten Förderguts in ungewollter Weise bewegt, sodass das Fördergut vom Förderwagen fällt.

Insbesondere haben die bekannten Ausführungen den Nachteil, dass die Abdeckung bei Geradeausfahrt zwischen den Laufrollen und dem Quergurt liegt und dadurch der Quergurt beim Fördern des Förderguts über die Abdeckung reibt. Besonders bei schweren Fördergütern können hohe Reibkräfte entstehen und es findet trotz der Laufrollen keine verschleißarme rollende Reibung zum Quergurt statt.

Die EP 1 041 019 A2 offenbart eine Fördereinrichtung zum Transport von Stückgut, wobei Stückgutteile jeweils an einer Aufgabestelle auf ein Förderelement aufzugeben und seitlich von der Fördereinrichtung abzugeben sind, wobei einander in Förderrichtung nachgeordnete, gelenkig miteinander verbundene und gemeinsam antreibbare Förderelemente einen in sich geschlossenen Förderstrang bilden, dessen Förderelemente jeweils eine von der Außenseite des Obertrums eines Gurtförderers gebildete Tragfläche bilden, und dessen quer steuerbar antreibbarer Fördergurt aus einer nicht-angetriebenen Förderstellung im Bereich der jeweiligen Abgabestelle so anzutreiben ist, dass das vom jeweiligen Gurtförderer abgestützte und in Förderrichtung der Fördereinrichtung geförderter Stückgutteil zur vorgegebenen Abgabestelle hinzufördern und dadurch abzugeben ist, und wobei die Förderelemente jeweils an dem Rand ihrer Tragfläche mit einer horizontalen Stützplatte versehen sind, welche einen Zwischenraum überdeckt, wobei jedes Förderelement nur an einem rechtwinklig zur Förderrichtung der Fördereinrichtung verlaufenden Querrand mit einer Stützplatte versehen ist und sich die Stützplatte eines Förderelementes soweit in Förderrichtung in den Bereich des benachbarten Förderelementes erstreckt, dass sie von diesem überlappt wird.

Die US 2013/019773 A1 offenbart ein Sortiersystem, bei dem eine Steuerung und ein Betrieb mittels einer kontaktlosen und drahtlosen Kommunikationskonfiguration vereinfacht ist. Die drahtlose Kommunikation ist mittels einer Sichtverbindung (LOS) erreicht, während sich die Wagen des Sortiersystems kontinuierlich entlang einer Strecke mit Betriebsgeschwindigkeit bewegen. Jedes Fahrzeug ist so konfiguriert, dass es in Bezug darauf, wie ein Wagen angewiesen wird, Pakete anzunehmen und auszuliefern, unabhängig arbeitet. Das Sortiersystem sieht für die Wagen vor, als Boten zwischen den Lagerplätzen und der Systemsteuerung zu fungieren in Bezug auf die Lage und den Zustand der Lagerplätze.

Die FR 3 011 537 A1 offenbart ein Verfahren und eine Vorrichtung zum Sortieren von Artikeln, mit mindestens einer Station zum automatischen Beladen der Artikel, die einen Transfer der Artikel zu einer oder mehreren Transporteinheiten erlaubt, wobei die Station mindestens eine Einrichtung zum Transportieren der Artikel und ein System zur Bestimmung der Position, der Form und der Größe der Artikel aufweist, mit einem Satz Quergurt-Transporteinheiten, von der jede mit einer Stützplatte zwischen zwei benachbarten Einheiten ausgebildet ist. Die Vorrichtung weist ein System auf, das ein Erfassen einer möglichen Veränderung in der Position des Artikels auf der Transporteinheit während der Beschleunigungsphase erlaubt. Den Artikel auf seiner Einheit in Position zu halten, ist während seiner Bewegung auf dem Sortierer dadurch gewährleistet, dass die Stützplatten permanent eine Stützfläche zwischen zwei Einheiten über eine Breite sicherstellen, die im Wesentlichen gleich ist wie die Stützfläche der Gurte und dass vertikale Profile an den Gurten vorhanden sind.

Die EP 3 159 288 A1 offenbart einen Sortierförderer mit einer Reihe von gelenkig miteinander verbundenen, entlang einer Fahrbahn geführten und verfahrbaren Fahrwagen, die jeweils eine Führungseinheit und eine damit gelenkig verbundene Trageinheit aufweisen, wobei jede Führungseinheit auf jeder Seite an übereinstimmenden Längspositionen eine Tragrolle zum Zusammenwirken mit der Fahrbahn aufweist, wobei zwischen der Führungseinheit und der Trageinheit eines jeden Fahrwagens ein schwenkbares Koppelgelenk angeordnet ist, wobei jeder Tragrolle zwei Führungsrollen zugeordnet sind, von denen eine erste an einer ersten Längsposition mit Abstand vor und eine zweite an einer zweiten Längsposition mit Abstand hinter der jeweiligen Tragrolle angeordnet ist, wobei zwischen benachbarten Fahrwagen ein in jeder Richtung drehbares Verbindungsgelenk angeordnet ist, wobei auf zwei mit einer Führungseinheit verbundenen Trageinheiten jeweils ein Lastaufnahmeelement angeordnet und zwischen den Lastaufnahmeelementen ein Zwischenraum gebildet ist, dadurch gekennzeichnet, dass auf der Führungseinheit eine Zwischenabdeckung gehalten ist, mit der der Zwischenraum zwischen den Lastaufnahmeelementen wenigstens teilweise abgedeckt ist.

Vor diesem Hintergrund ist es eine Aufgabe der Erfindung, eine Fördereinrichtung mit mindestens zwei Förderwagen und eine Abdeckung zum Abdecken eines Zwischenraums zwischen den zwei Förderwagen zur Verfügung zu stellen, wobei eine vollständige Abdeckung des Zwischenraums bei zuverlässigem Betrieb des Quergurtförderers verbessert ist und nicht mehr die Gefahr besteht, dass Fördergut bei einer Kurvenfahrt vom Förderwagen fällt.

Die Aufgabe wird durch die Gegenstände der unabhängigen Patentansprüche gelöst.

Ein Aspekt betrifft eine Fördereinrichtung mit mindestens zwei Förderwagen, die in Förderrichtung hintereinander angeordnet und derart voneinander beabstandet sind, dass ein Zwischenraum zwischen den beiden Förderwagen gebildet ist. Mindestens der eine Förderwagen weist eine Abdeckung auf und mindestens der andere Förderwagen weist einen Quergurtförderer zum Fördern von Fördergut in einer im Wesentlichen quer zur Förderrichtung ausgerichteten Querförderrichtung auf. Die Abdeckung deckt bei Geradeausfahrt und bei Kurvenfahrt der Förderwagen den Zwischenraum zwischen den Förderwagen ab, indem die Abdeckung des einen Förderwagens zumindest abschnittsweise unter dem Obertrum des Quergurts des anderen Förderwagens angeordnet ist, wobei bei Kurvenfahrt die Abdeckung zumindest abschnittsweise zwischen einer Unterseite des Obertrums und einer ersten Auflagerebene eingreift, um den Quergurt an einer Bewegung in Querförderrichtung zu hindern, und wobei bei Geradeausfahrt die Abdeckung zumindest abschnittsweise zwischen der ersten Auflagerebene und einer zweiten Auflagerebene eingreift, um die Bewegung des Quergurts in Querförderrichtung zuzulassen. Die erste Auflagerebene und die zweite Auflagerebene sind dabei voneinander beabstandet.

Ein Vorteil des Aspekts ist, dass einerseits eine wirksame Abdeckung des Zwischenraums zwischen den Förderwagen erreicht wird. Andererseits besteht auch nicht mehr die Gefahr, dass ein Fördergut auf dem Förderwagen mit dem Quergurtförderer den Quergurt durch die bei Horizontalkurvenfahrt auf das Fördergut wirkende Zentrifugalkraft antreibt und so ungewollt zum Kurvenäußeren befördert wird und ggf. vom Förderwagen fällt.

Ein weiterer Vorteil des Aspekts ist, dass bei Geradeausfahrt ein zuverlässiger Betrieb des Quergurtförderers durch die Abdeckung nicht behindert und somit sichergestellt ist.

Die genannten Vorteile kommen bei einem, wie heutzutage üblich, besonders reibungsarm eingesetzten und deshalb energiesparenden Quergurt besonders zum Tragen. Beispielsweise läuft ein mittels einer Spanneinrichtung gespannter Quergurt nicht reibungsarm, jedoch ein mittels einer Keilleiste geführter Quergurt. Die Keilleiste kann dabei an der Innenseite des Quergurts angeordnet und über entsprechende Nuten in den Zylinderrollen seitlich geführt sein.

Bei einem derartig reibungsarm eingesetzten Quergurt ist grundsätzlich die eingangs genannte Gefahr weiter erhöht, dass ein Fördergut auf dem Förderwagen mit dem Quergurtförderer den Quergurt durch die bei Horizontalkurvenfahrt auf das Fördergut wirkende Zentrifugalkraft antreibt und so ungewollt zum Kurvenäußeren befördert wird und ggf. vom Förderwagen fällt.

Zur Energieeinsparung und Verschleißminderung soll die Abdeckung nicht mehr unter Einwirkung der Gewichtskraft des Fördergutes die Drehung der Laufrollen bei Geradeausfahrt blockieren. Vielmehr soll zwischen dem Quergurt und den Laufrollen eine rollende Reibung herrschen und allenfalls im Bereich der Abdeckung eine gleitende Reibung, falls es durch die Gewichtskraft des Fördergutes zu einer Berührung zwischen Quergurt und Abdeckung kommt. Weiterhin soll dabei aber der Zwischenraum vollständig abgedeckt werden und bei einer Kurvenfahrt der Quergurt trotzdem gegen eine ungewollte Bewegung durch das darauf gelagerte Fördergut gesichert sein.

Die Fördereinrichtung kann zum Transportieren von Fördergut in einer Förderrichtung einen oder mehrere Förderwagen aufweisen. Die Fördereinrichtung kann als eine in einer Horizontalebene umlaufende Fördereinrichtung oder eine in einer Vertikalebene umlaufende Fördereinrichtung ausgebildet sein. Die Fördereinrichtung kann im Verlauf ihres Transportwegs eine von einer Geraden abweichende Horizontalkurvenführung und/oder Vertikalkurvenführung, d.h. Bergauf- und Bergabpassagen, enthalten.

Der Förderwagen der Fördereinrichtung kann zum Transportieren des Förderguts eine im Wesentlichen senkrecht zu einer Schwerkraftrichtung ausgebildete Förderfläche aufweisen, auf der das Fördergut aufgrund der auf das Fördergut wirkenden Schwerkraft abstellbar und somit mittels des Förderwagens transportierbar ist. Der Förderwagen kann einen Quergurtförderer zum Fördern von Fördergut in einer Richtung quer zu der Förderrichtung der Fördereinrichtung aufweisen.

Der Quergurtförderer kann zur Ausschleusung von Fördergut in einer Querförderrichtung quer zu der Förderrichtung der Fördereinrichtung vorgesehen sein, wobei der Quergurt des Quergurtförderers in die jeweils gewünschte Querförderrichtung antreibbar ist.

Die Abdeckung zur Abdeckung des Zwischenraums zwischen zwei Förderwagen kann aus einem Material und/oder mit einer Ausgestaltung ausgebildet sein, das bzw. die derart steif ist, dass der Zwischenraum zuverlässig überbrückbar ist, aber auch derart flexibel ist, dass eine, insbesondere vertikale, Lageabweichung zwischen den Förderwagen ausgleichbar ist.

Das Obertrum des Quergurts ist im Sinne der vorliegenden Erfindung der obere Teil des Quergurts zwischen den Umlenkrollen des Quergurts, also der Teil des Quergurts, auf dem ein zu transportierendes Fördergut aufliegt. Das Obertrum kann zwischen den Umlenkrollen auf Trag- und/oder Laufrollen aufliegen.

Tragrollen oder Laufrollen können zwischen den Umlenkrollen angeordnete drehbar gelagerte Zylinderrollen sein, auf die sich der Quergurt, insbesondere das Obertrum, abstützt. Ein zwischen den Umlenkrollen gespannter Quergurt kann beispielsweise durch eine ballige Ausführung der Umlenkrollen geführt werden. Nachfolgend wird vereinfachend für alle Rollen nur der Begriff "Laufrolle" verwendet.

Die erste Auflagerebene kann eine ebene Fläche sein, auf der das Obertrum mit seiner Unterseite bei ruhendem oder angetriebenem Quergurt aufliegt. Alternativ oder zusätzlich dazu kann die erste Auflagerebene eine gedachte Ebene sein, in der linienförmige und/oder flächige Auflagebereiche liegen, auf denen das Obertrum mit seiner Unterseite bei ruhendem oder angetriebenen Quergurt aufliegt.

Die zweite Auflagerebene kann eine ebene Fläche sein, auf der die Abdeckung zumindest abschnittsweise aufliegt, insbesondere bei Geradeausfahrt der Förderwagen. Alternativ oder zusätzlich dazu kann die zweite Auflagerebene eine gedachte Ebene sein, in der linienförmige und/oder flächige Auflagebereiche liegen, auf denen die Abdeckung zumindest abschnittsweise aufliegt, insbesondere bei Geradeausfahrt der Förderwagen.

Insbesondere bei Kurvenfahrt kann das Obertrum mit seiner Unterseite zumindest teilweise auf der ersten Auflagerebene und zumindest teilweise auf der Abdeckung des anderen Förderwagens aufliegen. Dabei kann die Abdeckung mit ihrer Unterseite zumindest teilweise auf der ersten Auflagerebene und zumindest teilweise auf der zweiten Auflagerfläche aufliegen.

Die nachfolgend verwendeten Begriffe "hinten" oder "hinter" und dergleichen bedeuten im Sinne der vorliegenden Erfindung eine Richtung entgegen der Förderrichtung der Fördereinrichtung und/oder eine Lage eines Elements relativ zu einem anderen Element in Bezug auf die Förderrichtung. Die nachfolgend verwendeten Begriffe "vorne" oder "vor" und dergleichen bedeuten im Sinne der vorliegenden Erfindung eine Richtung in der Förderrichtung der Fördereinrichtung und/oder eine Lage eines Elements relativ zu einem anderen Element in Bezug auf die Förderrichtung.

Die nachfolgend verwendeten Begriffe "oben" oder "oberhalb" und dergleichen bedeuten im Sinne der vorliegenden Erfindung eine Richtung entgegen der Schwerkraftrichtung und/oder eine Lage eines Elements relativ zu einem anderen Element in Bezug auf die Schwerkraftrichtung. Die nachfolgend verwendeten Begriffe "unten" oder "unterhalb" und dergleichen bedeuten im Sinne der vorliegenden Erfindung eine Richtung in der Schwerkraftrichtung und/oder eine Lage eines Elements relativ zu einem anderen Element in Bezug auf die Schwerkraftrichtung.

Die nachfolgend verwendeten Begriffe "außen" oder "innen" und dergleichen bedeuten im Sinne der vorliegenden Erfindung, dass ein, insbesondere idealisierter oder gedachter, Mittelpunkt ein innerster Punkt ist. Ein in Bezug dazu äußerer Bereich ist ein, insbesondere idealisierter oder gedachter, Umfangsbereich. Ein Punkt oder Bereich, der als weiter außen liegend bezeichnet ist als ein anderer Punkt oder Bereich, liegt also in radialer Richtung von dem Mittelpunkt ausgehend weiter in Richtung des Umfangsbereichs entfernt als der andere Punkt oder Bereich.

Relativbewegungen zwischen der Abdeckung an dem einen Förderwagen und dem anderen Förderwagen werden nachfolgend derart betrachtet und beschrieben, dass sich die Abdeckung in Bezug auf den anderen Förderwagen bewegt, auch wenn sich der Förderwagen in Bezug auf die Abdeckung bewegt.

Vorteilhafterweise kann bei Kurvenfahrt der Förderwagen ein freier Endabschnitt der Abdeckung von oben gesehen in eine Lücke zwischen zwei Laufrollen des Quergurtförderers schwenken und zumindest abschnittsweise von der zweiten Auflagerebene in die erste Auflagerebene angehoben werden, um sich auf die Oberseite derjenigen der beiden Laufrollen, die weiter zum Kurvenäußeren angeordnet ist, in eine Position, insbesondere in eine Bremsposition zumindest eines Abschnitts der Abdeckung, schieben, in der die Abdeckung zumindest abschnittsweise zwischen der Unterseite des Obertrums und der ersten Auflagerebene an der kurvenäußeren Laufrolle eingreift, um den Quergurt an der Bewegung in Querförderrichtung zu hindern, d.h. den Quergurt bremst.

Somit ist bei Kurvenfahrt ein Eingreifen der Abdeckung unter das Obertrum des Quergurts erleichtert.

Mit anderen Worten ist die Abdeckung in der Bremsposition zumindest abschnittsweise zwischen das Obertrum des Quergurts und mindestens einer der Laufrollen geschwenkt bzw. geschoben und klemmt sozusagen auf diese Weise zwischen dem Obertrum des Quergurts und mindestens einer der Laufrollen, was wegen der Gurtspannung des Quergurts eine Normalkraft auf die Abdeckung erzeugt. Diese Normalkraft in Verbindung mit einem vorteilhafterweise dafür günstig ausgelegten Reibbeiwert für Haftreibung zwischen der Unterseite des Obertrums und der Abdeckung sorgt für ein Bremsen bzw. In-Position-Halten des Quergurts und verhindert somit eine Bewegung in Querförderrichtung.

Alternativ oder zusätzlich dazu kann bei Kurvenfahrt der Förderwagen ein kurvenaußenseitiger seitlicher Endabschnitt der Abdeckung von oben gesehen in eine Lücke zwischen einer inneren Laufrolle und der kurvenäußern Umlenkrolle des Quergurtförderers schwenken. Insbesondere kann der kurvenaußenseitige seitliche Endabschnitt dabei zumindest abschnittsweise von der zweiten Auflagerebene in die erste Auflagerebene angehoben werden, um sich auf die Oberseite der kurvenäußeren Umlenkrolle in eine Position, insbesondere in eine Bremsposition zumindest eines Abschnitts der Abdeckung, zu schieben, in der die Abdeckung zumindest abschnittsweise zwischen der Unterseite des Obertrums und der ersten Auflagerebene an der kurvenäußeren Umlenkrolle eingreift, um den Quergurt an der Bewegung in Querförderrichtung zu hindern, d.h. den Quergurt bremst.

Mit anderen Worten ist die Abdeckung in der Bremsposition zumindest abschnittsweise zwischen das Obertrum des Quergurts und der kurvenäußeren Umlenkrolle geschwenkt bzw. geschoben und klemmt sozusagen auf diese Weise zwischen dem Obertrum des Quergurts und der kurvenäußeren Umlenkrolle, was eine Gurtspannung des Quergurts in radialer Richtung der Umlenkrolle nach außen erzeugt. Diese partielle Gurtspannung verhindert ein Umlaufen des Quergurtes an der Umlenkrolle, hindert somit den Quergurt an der Bewegung in Querförderrichtung und sorgt für ein Bremsen bzw. In-Position-Halten des Quergurts.

Insbesondere kann beim Schwenken des freien Endabschnitts in eine Lücke zwischen zwei Laufrollen eine Umfangskante des freien Endabschnitts an einem oberen Umfang derjenigen der beiden Laufrollen, die weiter zum Kurvenäußeren angeordnet ist, entlanggleiten bzw. ist die Umfangskante des freien Endabschnitts von dem abgerundeten Oberteil der Laufrolle, die weiter zum Kurvenäußeren angeordnet ist, beim Schwenken des freien Endabschnitts in die Bremsposition geführt. Somit kann der freie Endabschnitt auf einfache Art und Weise in die Brems- bzw. Halteposition gelangen und das Eingreifen der Abdeckung unter das Obertrum ist weiter erleichtert.

Vorteilhafterweise kann bei Geradeausfahrt der Förderwagen die Abdeckung im Bereich des Förderwagens mit dem Quergurtförderer auf der zweiten Auflagerebene, insbesondere in einer Auflageposition der Abdeckung, aufliegen. Somit ist eine Bewegung des Quergurts zugelassen und ein zuverlässiger Betrieb des Quergurtförderers gewährleistet.

Insbesondere kann bei Geradeausfahrt der Förderwagen die Abdeckung im Bereich des Förderwagens mit dem Quergurtförderer ausschließlich auf der zweiten Auflagerebene aufliegen.

Vorteilhafterweise kann die erste Auflagerebene im Wesentlichen parallel zu der zweiten Auflagerebene ausgerichtet sein. Somit ist ein Kreuzen der Auflagerebenen vermieden, was ansonsten ein Überschneiden der Bremsposition und der Auflageposition, d.h. der Bereiche des Verhinderns und des Zulassens der Bewegung des Quergurts, zur Folge haben könnte. Eine Überschneidung dieser Positionen könnte aber die erwünschte Bewegung des Quergurts bei Geradeausfahrt verhindern und/oder die unerwünschte Bewegung des Quergurts bei Kurvenfahrt zulassen.

Vorteilhafterweise können die erste und die zweite Auflagerebene etwa senkrecht zu ihrer Ausbreitungsrichtung voneinander beabstandet sein. Dies trägt weiter dazu bei, dass ein Überschneiden der der Bremsposition und der Auflageposition vermieden werden kann.

Insbesondere kann die zweite Auflagerebene unterhalb der ersten Auflagerebene ausgebildet sein. Somit kann weiter gewährleistet werden, dass in der Auflageposition die erwünschte Bewegung des Quergurts bei Geradeausfahrt zugelassen und die unerwünschte Bewegung des Quergurts bei Kurvenfahrt verhindert werden kann.

Vorteilhafterweise kann die erste Auflagerebene als eine von jeweils einer obersten Mantellinie der Laufrollen des Quergurtförderers definierten Förderebene ausgebildet sein und die zweite Auflagerebene als eine Auflagefläche ausgebildet sein, die sich an innere Laufrollen des Quergurtförderers in deren Achsrichtung anschließt, wobei die inneren Laufrollen zwischen Umlenkrollen des Quergurtförderers ausgebildet sind. Somit können die beiden Auflagerebenen auf einfache Art und Weise realisiert werden.

Insbesondere bei Geradeausfahrt der Förderwagen können die Förderebene und die erste Auflagerebene zusammenfallen. Somit kann bei Geradeausfahrt die zweite Auflagerebene unterhalb der Förderebene und der ersten Auflagerebene ausgebildet sein.

Insbesondere bei Kurvenfahrt der Förderwagen können die Förderebene und die erste Auflagerebene voneinander beabstandet sein, beispielsweise um die Dicke der Abdeckung. Somit kann bei Kurvenfahrt die zweite Auflagerebene unterhalb der Förderebene und der ersten Auflagerebene ausgebildet sein und die Förderebene unterhalb der ersten Auflagerebene ausgebildet sein.

Die Umlenkrollen sind die äußersten Laufrollen des Quergurtförderers.

Vorteilhafterweise können die inneren Laufrollen und die Auflagefläche in axialer Richtung der Laufrollen gesehen zusammen eine etwa gleich große Erstreckung haben wie die axiale Erstreckung der Umlenkrollen.

Mit anderen Worten können die inneren Laufrollen zwar kürzer sein als die Umlenkrollen, was aber mittels der sich in deren Achsrichtung anschließenden Auflagefläche im Hinblick auf die Länge der Umlenkrollen ausgleichbar ist. Somit kann auf einfache Art und Weise die zweite Auflagerebene als eine Auflagefläche realisiert werden, auf der die Abdeckung zumindest abschnittsweise in ihrer Auflageposition ist, ohne ungewollt mit Laufrollen und/oder dem Quergurt des Quergurtförderers in Kontakt zu kommen. Dies kann einen zuverlässigen Betrieb des Quergurtförderers weiter begünstigen.

Vorteilhafterweise kann zwischen den Umlenkrollen, insbesondere in der Mitte zwischen den Umlenkrollen, des Quergurtförderers eine Mittenlaufrolle mit einer axialen Erstreckung angeordnet sein, die derjenigen der Umlenkrollen entspricht, wobei die inneren Laufrollen zu beiden Seiten der Mittenlaufrolle ausgebildet sein können. Somit kann eine im Bereich der Auflageflächen für die Abdeckung ansonsten freie Strecke zwischen den Umlenkrollen verringert und dadurch eine Abstützung des Obertrums verbessert werden. Auch eine Führung des Quergurts kann somit verbessert werden, weil der Quergurt dadurch in der Mitte eine Auflage über seine gesamte Breite hat.

Beispielsweise kann die Mittenlaufrolle federnd gelagert sein, um ein elastisches kraftinduziertes Gegenlager zu einer den Quergurt antreibenden Reibradrolle zu bilden.

Ein weiterer Aspekt betrifft eine Abdeckung zum Abdecken eines Zwischenraums zwischen zwei Förderwagen einer Fördereinrichtung, die in Förderrichtung hintereinander angeordnet und voneinander beabstandet sind, wobei mindestens der eine Förderwagen die Abdeckung und mindestens der andere Förderwagen einen Quergurtförderer zum Fördern von Fördergut in einer im Wesentlichen quer zur Förderrichtung ausgerichteten Querförderrichtung aufweist. Dabei hat die Abdeckung eine scheibenartige Form mit einem Anschlussabschnitt zum Anschließen der Abdeckung an einen sich quer zur Förderrichtung erstreckenden Aufnahmeabschnitt des Förderwagens. Weiter weist die Abdeckung sich an den Anschlussabschnitt anschließenden seitliche konvex ausgebildete Endabschnitte auf und einen Eingreifabschnitt zum zumindest abschnittsweisen Eingreifen unter eine Unterseite eines Obertrums eines Quergurts des Quergurtförderers. Der Eingreifabschnitt weist eine Aussparung auf zum Verhindern des zumindest abschnittsweisen Eingreifens unter die Unterseite des Obertrums des Quergurts im Bereich der Aussparung.

Ein Vorteil des weiteren Aspekt ist, dass mittels der beschriebenen besonderen Ausbildung der Abdeckung eine vollständige Abdeckung des Zwischenraums bei zuverlässigem Betrieb des Quergurtförderers erreichbar ist. Insbesondere kann die Aussparung eine gewünschte Bewegung des Quergurts zulassen, beispielsweise bei Geradeausfahrt der Förderwagen, und den zuvor beschriebenen Effekt, eine unerwünschte Bewegung des Quergurts, beispielsweise bei Kurvenfahrt der Förderwagen, zu verhindern, unterstützen.

Insbesondere kann der Anschlussabschnitt im Wesentlichen geradlinig ausgebildet sein zum parallelen Anschließen der Abdeckung an den Aufnahmeabschnitt des Förderwagens.

Beispielsweise können sich die seitlichen konvex ausgebildeten Endabschnitte etwa rechtwinklig an den Anschlussabschnitt anschließen. Dabei kann der Radius der Konvexität in Abhängigkeit einer Ausdehnung des Zwischenraums in Förderrichtung und/oder in Abhängigkeit eines zu erwartenden bzw. zulässigen Horizontalkurvenwinkels ausgewählt werden. Mittels der konvexen Ausbildung der seitlichen Endabschnitte kann auch bei einem durch Kurvenfahrt bedingtem Verschwenken der Abdeckung ein annähernd gleichbleibendes Abdecken des Zwischenraums gewährleistet werden.

Insbesondere kann der Eingreifabschnitt parallel zum Anschlussabschnitt, d.h. quer zur Förderrichtung, ausgebildet sein. Somit kann ein Aufliegen des Eingreifabschnitts auf der oben beschriebenen Auflagefläche für die Abdeckung gewährleistet werden, ohne dass der Eingreifabschnitt ungewollt mit Laufrollen und/oder dem Quergurt des Quergurtförderers des anderen Förderwagens in Berührung kommt.

Ein Übergang von dem seitlichen Endabschnitt zu dem Eingreifabschnitt ist als ein in radialer Richtung ausgebildeter Rücksprung ausgebildet. Somit kann auch bei einem durch Kurvenfahrt bedingtem Verschwenken der Abdeckung ein annähernd gleichbleibendes Abdecken des Zwischenraums gewährleistet werden, wobei insbesondere ein Bereich des Zwischenraums an den Umlenkrollen des Quergurtförderers des anderen Förderwagens wirksam abdeckbar ist.

Insbesondere kann der Eingreifabschnitt in der Mitte eine Aussparung zum Verhindern des zumindest abschnittsweisen Eingreifens unter die Unterseite des Obertrums des Quergurts im Bereich der Aussparung aufweisen. Insbesondere bei zuvor beschriebener Geradeausfahrt kann somit ein zumindest abschnittsweises Eingreifen der Abdeckung zwischen die Unterseite des Obertrums und die erste Auflagerebene verhindert werden. Beispielsweise bei einer zuvor beschriebenen vorhandenen Mittenlaufrolle könnte ansonsten, d.h. ohne eine derartige Aussparung, eine erwünschte Bewegung des Quergurts verhindert werden.

Beispielsweise kann der Eingreifabschnitt über seine Erstreckung von dem einen seitlichen Endabschnitt zu dem anderen seitlichen Endabschnitt mehrere derartige Aussparungen aufweisen. Dabei können die Abstände der Aussparungen in Abhängigkeit der Achsabstände der Laufrollen des Quergurtförderers des anderen Förderwagens ausgewählt werden.

Insbesondere kann eine Umfangskante der Aussparung bei Kurvenfahrt von oben gesehen in eine Lücke zwischen zwei Laufrollen des Quergurtförderers schwenken und sich auf die Oberseite derjenigen der beiden Laufrollen, die weiter zum Kurvenäußeren angeordnet ist, in eine Position, insbesondere in eine Bremsposition zumindest eines Abschnitts der Abdeckung, schieben, in der die Abdeckung zumindest abschnittsweise zwischen der Unterseite des Obertrums und der ersten Auflagerebene eingreift, um den zuvor beschriebenen Effekt, den Quergurt an der Bewegung in Querförderrichtung zu hindern, d.h. den Quergurt zu bremsen, zu unterstützen.

Vorteilhafterweise kann die Bremswirkung bzw. das In-Position-Halten des Quergurts im Wesentlichen an den äußeren Umlenkrollen erzielt werden. Wie beschrieben, kann die Umfangskante der Aussparung zwischen der Unterseite des Obertrums und der ersten Auflagerebene eingreifen, aber die Bremswirkung kann dabei nur im begrenztem Ausmaß gesteuert werden; dies kann besser an den Umlenkrollen erfolgen.

Insbesondere kann die Abdeckung hinten am vorderen Förderwagen ausgebildet sein und der Quergurtförderer am hinteren Förderwagen ausgebildet sein, oder die Abdeckung kann vorne am hinteren Förderwagen und der Quergurtförderer am vorderen Förderwagen ausgebildet sein.

Alternativ kann die Abdeckung vorne oder hinten an dem einen Förderwagen und der Quergurtförderer am gleichen Förderwagen ausgebildet sein.

Beispielsweise kann die Abdeckung vorne und hinten an dem einen Förderwagen ausgebildet sein und der Quergurtförderer kann an dem anderen Förderwagen ausgebildet sein. Mit anderen Worten können sich Förderwagen mit vorne und hinten ausgebildeten Abdeckungen und Förderwagen ohne Abdeckung in der Fördereinrichtung abwechseln.

Vorteilhafterweise kann die Aussparung etwa V-förmig ausgebildet sein, um zu gewährleisten, dass die Umfangskante der Aussparung erst ab einem bestimmten Kurvenradius, insbesondere wenn an einer der Umlenkrollen schon eine ausreichende Bremswirkung erzielt wird, zwischen der Unterseite des Obertrums und der ersten Auflagerebene eingreift.

Insbesondere kann die offene Seite der Aussparung zu der Mittenlaufrolle des anderen Förderwagens hin gerichtet sein.

Vorteilhafterweise kann eine Erstreckung der Aussparung in Förderrichtung und/oder ein V-Winkel der Aussparung in Abhängigkeit eines zu erwartenden bzw. eines zugelassenen Horizontalkurvenwinkels der Förderwagen zur Förderrichtung ausgebildet sein.

Somit ist mittels einer Dimensionierung der Aussparung, insbesondere einer Dimensionierung der Erstreckung der Aussparung in Förderrichtung und/oder des V-Winkels, festlegbar, ab welchem Horizontalkurvenwinkel sich der Eingreifabschnitt an der Aussparung zwischen die Mittenlaufrolle und das Obertrum des Quergurts schiebt.

Die Abdeckung kann zumindest teilweise aus einem derart flexiblen Material ausgebildet sein oder derart flexibel an dem Förderwagen angebracht sein oder eine derartige Ausgleichseinrichtung, beispielsweise ein Scharnier oder mindestens ein Gelenk, aufweisen, dass eine Vertikalbewegung eines der beiden Förderwagen in Bezug auf den anderen Förderwagen und/oder ein Unterschied in einem Neigungswinkel zur Horizontalen in Förderrichtung der Fördereinrichtung zwischen den beiden Förderwagen ausgleichbar ist.

Somit kann bei Kurvenfahrt der Förderwagen ein zwischen der Unterseite des Obertrums und der ersten Auflagerebene eingreifender Abschnitt der Abdeckung und die erste Auflagerebene trotz der Vertikalbewegung eines der beiden Förderwagen in Bezug auf den anderen Förderwagen und/oder eines Unterschieds in einem Neigungswinkel zur Horizontalen in Förderrichtung zwischen den beiden Förderwagen eine etwa gleiche Ausrichtung behalten.

Eine Vertikalbewegung eines der beiden Förderwagen in Bezug auf den anderen Förderwagen und/oder ein Unterschied in einem Neigungswinkel zur Horizontalen in Förderrichtung zwischen den beiden Förderwagen kann beispielsweise bei Bergauf- oder Bergabfahrt der Förderwagen entstehen.

Weiter kann bei Geradeausfahrt der Förderwagen ein auf der zweiten Auflagerebene aufliegender Abschnitt der Abdeckung und die zweite Auflagerebene trotz der Vertikalbewegung eines der beiden Förderwagen in Bezug auf den anderen Förderwagen und/oder eines Unterschieds in einem Neigungswinkel zur Horizontalen in Förderrichtung der Fördereinrichtung zwischen den beiden Förderwagen eine etwa gleiche Ausrichtung behalten.

Somit ist verhindert, dass ansonsten die Abdeckung zumindest abschnittsweise in das Obertrum des Quergurts oder in mindestens eine der Laufrollen eingreift und dadurch die Abdeckung, der Quergurt und/oder mindestens eine der Laufrollen beschädigt werden.

Nachfolgend ist ein Ausführungsbeispiel der erfindungsgemäßen Fördereinrichtung und der erfindungsgemäßen Abdeckung anhand von Zeichnungen näher erläutert. Es zeigen:
- Fig. 1: eine Draufsicht einer Fördereinrichtung gemäß dem Ausführungsbeispiel der Erfindung mit zwei Förderwagen in Geradeausfahrt,
- Fig. 2: eine Seitenansicht des oberen Teil des Förderwagens ohne das darunter liegende Fahrwerk gemäß dem Ausführungsbeispiel in Fig. 1,
- Fig. 3: eine vergrößerte Ansicht des Details A gemäß Fig. 2 bei Geradeausfahrt,
- Fig. 3a: eine vergrößerte Ansicht des Details A gemäß Fig. 2 bei Kurvenfahrt, und
- Fig. 4: eine Draufsicht einer Abdeckung gemäß dem Ausführungsbeispiel in Fig. 1.
- Fig. 5: eine Draufsicht der Fördereinrichtung gemäß Fig. 1 mit zwei Förderwagen in Kurvenfahrt,

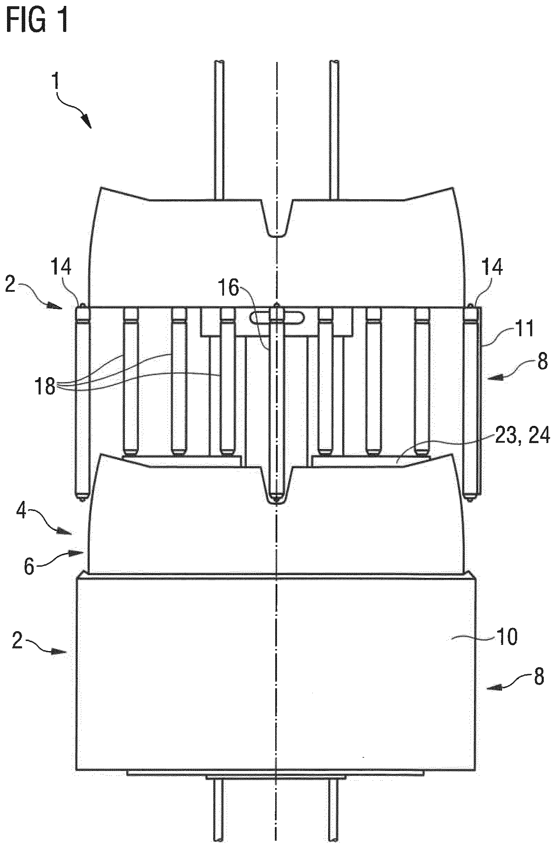

Die in **Fig. 1** dargestellte Fördereinrichtung 1 gemäß dem Ausführungsbeispiel der Erfindung hat zwei Förderwagen 2, die zueinander in Förderrichtung hintereinander angeordnet und beabstandet sind. Ein daraus resultierender Zwischenraum 4 zwischen den Förderwagen 2 ist von der Abdeckung 6 abgedeckt.

In dem gezeigten Ausführungsbeispiel können beide Förderwagen 2 einen Quergurtförderer 8 und eine jeweils vorne angebrachte Abdeckung 6 aufweisen. Da in diesem Ausführungsbeispiel beide Förderwagen 2 gleich ausgebildet sind, gilt die nachfolgende Detailbeschreibung gleichermaßen für beide Förderwagen 2.

Der Quergurtförderer 8 kann einen Quergurt 10 und mehrere drehbar gelagerte Laufrollen in einem Rahmen 11 enthalten. Bei dem dargestellten Ausführungsbeispiel sind die Laufrollen insbesondere Umlenkrollen 14, eine Mittenlaufrolle 16, die federnd gelagert ist, um ein elastisches kraftinduziertes Gegenlager zu einer den Quergurt 10 antreibenden und nicht dargestellten Reibradrolle zu bilden, und zwischen diesen angeordnete innere Laufrollen 18. An dem vorderen Förderwagen 2 ist zum besseren Verständnis der Quergurt 10 weggelassen. Die äußersten Laufrollen sind Umlenkrollen 14 und eine in der Mitte angeordnete Laufrolle kann als eine Mittenlaufrolle 16 ausgebildet sein. Zu beiden Seiten der Mittenlaufrolle 16 können die Laufrollen als innere Laufrollen 18 ausgebildet sein.

Die Umlenkrollen 14 und die Mittenlaufrolle 16 können eine gleiche axiale Erstreckung aufweisen, wobei die inneren Laufrollen 18 in axialer Richtung kürzer ausgebildet sein können als die Umlenkrollen 14 und die Mittenlaufrolle 16. Da alle Laufrollen mit ihrer einen Stirnseite an der vorderen Seite des Förderwagens 2 angeordnet sind, entsteht in deren Achsrichtung nach hinten eine Lücke zu dem Rahmen 11. Die Lücke kann mit einer als Auflagefläche 23 ausgebildeten zweiten Auflagerebene 24 für die Abdeckung 6 ausgebildet sein.

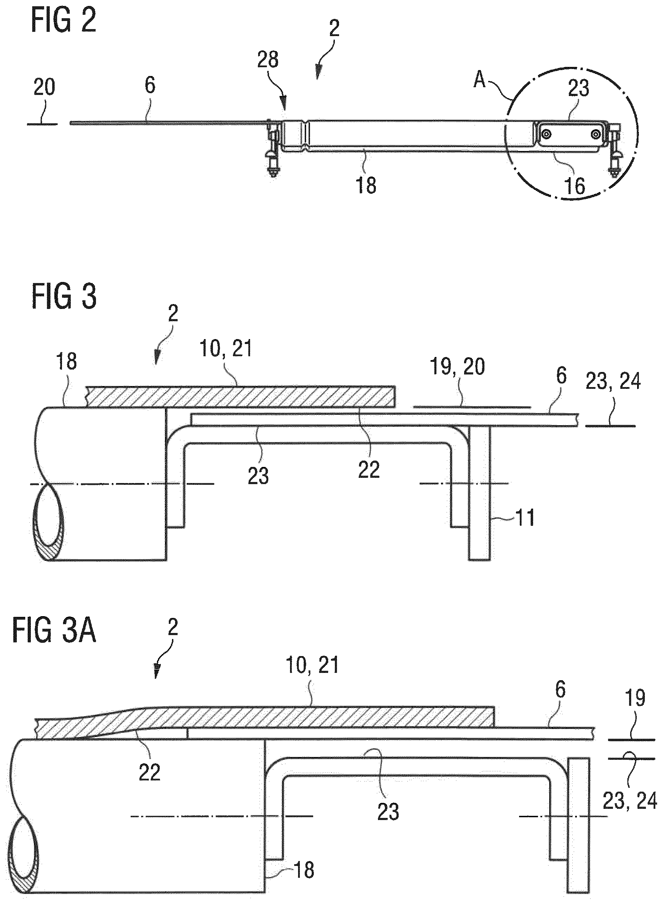

Bei der in **Fig. 2** dargestellten Seitenansicht eines der Förderwagen 2 sind zum besseren Verständnis der Quergurt 10 und die ansonsten sichtbare Umlenkrolle 14 weggelassen und soll die prinzipielle Ausgestaltung eines Förderwagens 2 mit daran angeordneter Abdeckung 6 zeigen.

Die Abdeckung 6 kann derart an dem Förderwagen 2 angebracht sein, dass eine Unterseite der Abdeckung 6 entweder bei Kurvenfahrt zumindest abschnittsweise in der ersten Auflagerebene 20 oder bei Geradeausfahrt komplett in der zweiten Auflagerebene 24 liegt, mithin auf der Auflagefläche 23 aufliegt. Dies ist möglich, weil die Abdeckung 6 aus flexiblem Material ausgebildet ist und sich, der Schwerkraft folgend, nach unten bewegt. Wenn also die Abdeckung 6 nicht von der ersten Auflagerebene 20 gehalten ist, bzw. auf ihr aufliegt, wird sie sich, der Schwerkraft folgend, in Richtung der zweiten Auflagerebene 24 bewegen und dann auf der Auflagefläche 23 aufliegen, da die zweiten Auflagerebene 24 und damit die Auflagefläche 23 unterhalb der ersten Auflagerebene 20 liegt. Die Auflagefläche 23 kann als ein Blechformteil oder als ein Kunststoffformteil ausgebildet sein, insbesondere mit einer ebenen bzw. glatten Auflagefläche 23.

Bei der vergrößerten Ansicht des Details A gemäß Fig. 2 in **Fig. 3** und **Fig. 3a** sind zum besseren Verständnis die Umlenkrollen 14, die Mittelaufrolle 16 sowie umlaufende Kanten und andere Details des Rahmens 11 weggelassen. In den beiden Figuren ist gezeigt, dass die sich an eine innere Laufrolle 18 anschließende und als Auflagefläche 23 ausgebildete zweite Auflagerebene 24 senkrecht nach unten von der ersten Auflagerebene 20 beabstandet angeordnet ist.

Die obersten Mantellinien der Laufrollen liegen in einer gemeinsamen Förderebene 19, die die erste Auflagerebene 20 für ein Obertrum 21 des Quergurts 10 darstellt.

In **Fig. 3** ist gezeigt, dass bei Geradeausfahrt die Abdeckung 6 des hinteren Förderwagens 2 unter das Obertrum 21 und somit zwischen der ersten Auflagerebene 20 und der zweiten Auflagerebene 24 eingreift, um auf der Auflagefläche 23 aufzuliegen. Die Dicke der Abdeckung 6 und die Höhendifferenz zwischen der ersten Auflagerebene 20 und der zweiten Auflagerebene 24 sind so gewählt, dass die Oberseite der Abdeckung 6 die Unterseite 22 des Obertrums 21 nicht berührt, insbesondere wenn kein Fördergut aufliegt. Wenn im Bereich der zweiten Auflagerebene 24 ein Fördergut aufliegt, senkt sich das Obertrum 21 ab und es kommt nur in diesem Bereich an der Abdeckung 6 zu einer gleitenden Berührung ohne jegliche Beeinflussung der rollenden Reibung des Obertrums 21 im Bereich der Laufrollen.

Die Abdeckung 6 des hinteren Förderwagens 2 kann, insbesondere ausschließlich, auf der Auflagefläche 23 bzw. der zweiten Auflagerebene 24 aufliegen. Der Quergurt 10 liegt dabei mit der Unterseite 22 seines Obertrums 21 auf der ersten Auflagerebene 20 auf.

In **Fig. 3a** ist gezeigt, dass bei Kurvenfahrt die Abdeckung 6 des hinteren Förderwagens 2 zwischen der Unterseite 22 des Obertrums 21 und der ersten Auflagerebene 20 eingreift, indem sich die Abdeckung 6 auf die Oberseite der inneren Laufrolle 18 aufschiebt und dort aufliegt. Folglich wird die Unterseite 22 des Obertrums 21 um die Dicke der Abdeckung 6 angehoben und liegt in diesem Bereich auf der Oberseite der Abdeckung 6 auf. Dabei wird die Abdeckung 6 um mindestens die Dicke der Abdeckung 6 angehoben und zwischen das Obertrum 21 und die Oberseite der inneren Laufrolle 18 geschoben und bremst den Quergurt 10. Dies unterstützt bei Kurvenfahrt die erwünschte Brems- bzw. Haltewirkung des Quergurts 10.

Folglich liegt die Abdeckung 6 des hinteren Förderwagens 2 zumindest teilweise auf der ersten Auflagerebene 20 bzw. auf der Oberseite der inneren Laufrolle 18 auf. Zusätzlich dazu könnte die Abdeckung 6 des hinteren Förderwagens 2 dabei zumindest sogar teilweise auf der Auflagefläche 23 bzw. der zweiten Auflagerebene 24 aufliegen. Der Quergurt 10 liegt mit einem Teil der Unterseite 22 seines Obertrums 21 auf der Oberseite der inneren Laufrolle 18 (erste Auflagerebene 20) und mit einem anderen Teil der Unterseite 22 seines Obertrums 21 auf der Abdeckung 6 des hinteren Förderwagens 2 auf.

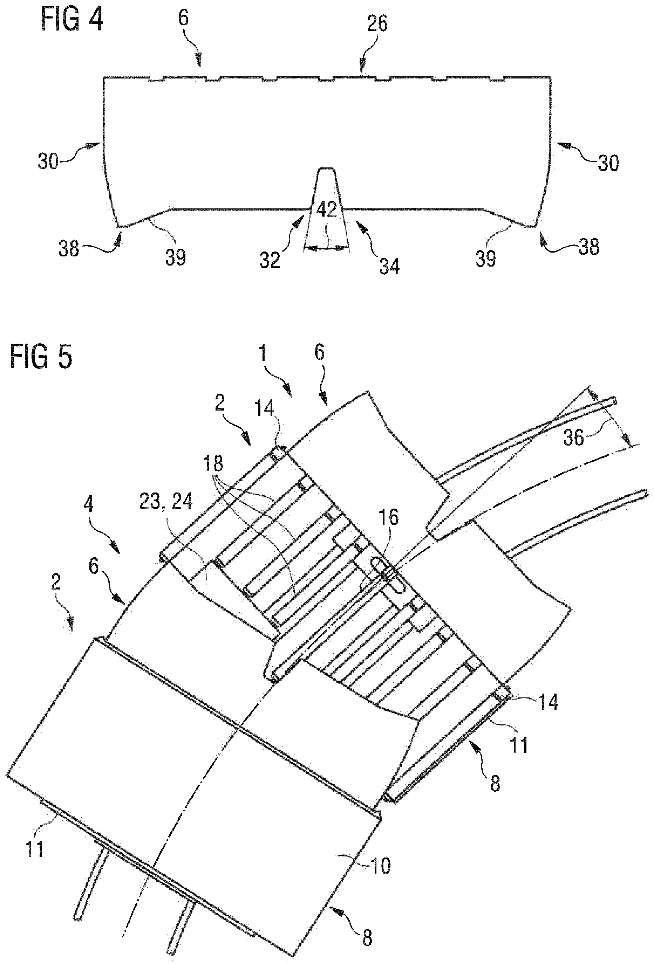

Die in **Fig. 4** gezeigte Abdeckung 6 hat eine scheibenartige Form mit einem Anschlussabschnitt 26 zum Anschließen der Abdeckung 6 an einen sich quer zur Förderrichtung erstreckenden Aufnahmeabschnitt 28 des Förderwagens 2 (siehe **Fig. 2**).

Weiter weist die Abdeckung 6 sich an den Anschlussabschnitt 26 anschließende seitliche konvex ausgebildete Endabschnitte 30 auf und einen Eingreifabschnitt 32 zum zumindest abschnittsweisen Eingreifen unter die Unterseite 22 des Obertrums 21.

Der Eingreifabschnitt 32 weist eine Aussparung 34 auf zum Verhindern des zumindest abschnittsweisen Eingreifens unter die Unterseite 22 des Obertrums 21 im Bereich der Aussparung 34.

Der Anschlussabschnitt 26 kann im Wesentlichen geradlinig ausgebildet sein zum parallelen Anschließen der Abdeckung 6 an den Aufnahmeabschnitt 28 des Förderwagens 2.

Die seitlichen konvex ausgebildeten Endabschnitte 32 können sich etwa rechtwinklig an den Anschlussabschnitt 26 anschließen. Dabei kann der Radius der Konvexität in Abhängigkeit einer Ausdehnung des Zwischenraums 4 in Förderrichtung und/oder in Abhängigkeit eines zu erwartenden bzw. zulässigen Horizontalkurvenwinkels 36 (siehe **Fig. 5**) ausgewählt werden.

Der Eingreifabschnitt 32 kann parallel zum Anschlussabschnitt 26, d.h. quer zur Förderrichtung, ausgebildet sein.

Ein Übergang 38 von dem seitlichen Endabschnitt 30 zu dem Eingreifabschnitt 32 ist als ein in radialer Richtung ausgebildeter Rücksprung 39 ausgebildet.

Der Eingreifabschnitt 32 kann in der Mitte eine Aussparung 34 zum Verhindern des zumindest abschnittsweisen Eingreifens unter die Unterseite 22 des Obertrums 21 im Bereich der Aussparung 34 aufweisen.

Die Aussparung 34 kann etwa V-förmig ausgebildet sein, wobei die offene Seite der Aussparung 34 zu der Mittenlaufrolle 16 des anderen Förderwagens 2 hin gerichtet sein kann.

Nachfolgend wird die Funktionsweise der Abdeckung 6 während eines Betriebs der Fördereinrichtung 1 mit Bezug auf die Zeichnungen beschrieben.

Bei der in **Fig. 1** dargestellten Geradeausfahrt der Förderwagen 2 liegt die Abdeckung 6 im Bereich des vorderen Förderwagens 2 ausschließlich auf der zweiten Auflagerebene 24 auf. Dabei kann die Abdeckung 6 zwischen der ersten Auflagerebene 20 und der zweiten Auflagerebene 24 eingreifen, um die Bewegung des Quergurts 10 in Querförderrichtung zuzulassen. Der zuvor beschriebene Übergang 38 von dem seitlichen Endabschnitt 30 zu dem Eingreifabschnitt 32, der als in radialer Richtung Rücksprung 39 ausgebildet ist, bedingt, dass die Abdeckung 6 nicht ungewollt mit Laufrollen und/oder dem Quergurt 10 in Kontakt kommt. Mit anderen Worten greift die Abdeckung 6 dabei nicht zwischen die Unterseite 22 des Obertrums 21 und die erste Auflagerebene 20 ein. Es versteht sich dabei, dass die Abdeckung 6 auf der Auflagefläche 23 aufliegt.

Bei der in **Fig. 5** dargestellten Kurvenfahrt der Förderwagen 2 kann ein freier Endabschnitt der Abdeckung 6 von oben gesehen an einer kurveninneren Seite des vorderen Förderwagens 2 mit einer Umfangskante voraus in eine Lücke zwischen zwei Laufrollen des Quergurtförderers 8, nämlich die kurveninnseitige Umlenkrolle 14 und die dazu benachbarte innere Laufrolle 18, schwenken und sich auf die Oberseite derjenigen der beiden Laufrollen, die weiter zum Kurvenäußeren angeordnet ist, nämlich die zuvor genannte innere Laufrolle 18, schieben. Dadurch wird Abdeckung 6 in diesem Bereich angehoben und die angestrebte Brems- Halteposition von zumindest einem Abschnitt der Abdeckung 6 erzeugt. In der Bremsposition greift die Abdeckung 6 also zumindest abschnittsweise zwischen der Unterseite 22 des Obertrums 21 und der ersten Auflagerebene 20 ein, um den Quergurt 10 an der Bewegung in Querförderrichtung zu hindern, d.h. den Quergurt 10 bei Kurvenfahrt zu bremsen bzw. zu halten. Ein freier Endabschnitt der Abdeckung 6 kann dabei beispielsweise einer der seitlichen Endabschnitte 30 der Abdeckung 6 oder der Eingreifabschnitt 32, insbesondere im Bereich der Aussparung 34, sein.

Bei Kurvenfahrt schwenkt die Abdeckung 6 an der kurvenäußeren Seite des vorderen Förderwagens 2 zumindest abschnittsweise in Richtung aus dem Bereich des vorderen Förderwagens 2 heraus.

Dadurch kann alternativ oder zusätzlich zu der oben beschriebenen Brems- bzw. Haltefunktion des Quergurts 10 ein freier Endabschnitt der Abdeckung 6 von oben gesehen an einer kurvenäußeren Seite des vorderen Förderwagens 2 mit einer Umfangskante voraus in einer Lücke zwischen der kurvenaußenseitigen Umlenkrolle 14 und der dazu benachbarten inneren Laufrolle 18 schwenken und sich im Bereich der Umlenkrolle 14 zwischen die Unterseite 22 des Obertrums 21 und die Oberseite der Umlenkrolle 14 schieben und den Quergurt 10 blockieren. Dadurch wird Abdeckung 6 in diesem Bereich um mindestens die Dicke der Abdeckung 6 angehoben und die angestrebte Brems- Halteposition von zumindest einem Abschnitt der Abdeckung 6 erzeugt. In der Bremsposition greift die Abdeckung 6 also zumindest abschnittsweise zwischen der Unterseite 22 des Obertrums 21 und der ersten Auflagerebene 20 ein, um den Quergurt 10 an der Bewegung in Querförderrichtung zu hindern, d.h. den Quergurt 10 bei Kurvenfahrt zu bremsen bzw. zu halten. Ein freier Endabschnitt der Abdeckung 6 kann dabei beispielsweise einer der seitlichen Endabschnitte 30 der Abdeckung 6 oder der Eingreifabschnitt 32 sein, insbesondere im Bereich des Übergangs zwischen dem seitlichen Endabschnitt 30 der Abdeckung 6 und dem Rücksprung 39.

Trotzdem kann der Zwischenraum 4 von der Abdeckung 6 weiterhin vollständig abgedeckt werden, da der Übergang 38 wie zuvor beschrieben, als in radialer Richtung Rücksprung 39 ausgebildet ist. Die Abdeckung 6 ragt dabei an der kurvenäußeren Seite des vorderen Förderwagens 2 mindestens mit dem Rücksprung 39 in den Bereich des vorderen Förderwagens 2.

Die Ausbildung des Übergangs 38 von dem seitlichen Endabschnitt 30 zu dem Eingreifabschnitt 32 als in radialer Richtung ausgebildeter Rücksprung 39 kann also dazu dienen, zwei eigentlich gegensätzliche Ziele zu erreichen: Einerseits, bei Geradeausfahrt einen ungewollten Kontakt der Abdeckung 6 mit den Laufrollen und/oder der Unterseite 22 des Quergurts 10 zu verhindern und andererseits bei Kurvenfahrt den Zwischenraum 4 trotz des zuvor beschriebenen Herausschwenkens von der Abdeckung 6 vollständig abzudecken.

Der Übergang 38 kann vorteilhafterweise derart dimensioniert sein, dass bei maximalem Horizontalkurvenwinkel 36 der Übergang 38 noch im Bereich des anderen Förderwagens 2 unter dem Obertrum 21 angeordnet ist.

Mittels der zuvor beschriebenen konvexen Ausbildung der seitlichen Endabschnitte 30 kann bei Kurvenfahrt sowohl beim Einschwenken der Abdeckung 6 auf der kurveninneren Seite des Förderwagens 2 als auch auf beim Herausschwenken der Abdeckung 6 auf der kurvenäußeren Seite des Förderwagens 2 ein Abdecken des Zwischenraums 4 gewährleistet werden, was auch Kurvenfahrten nach rechts oder links betrifft.

Das zu dem Übergang 38 Gesagte gilt analog für die Aussparung 34, mittels der einerseits bei Geradeausfahrt ein ungewollter Kontakt der Abdeckung 6 mit der Mittenlaufrolle 16 und/oder dem Quergurt 10 verhindert werden kann und andererseits bei Kurvenfahrt die Abdeckung 6 zumindest abschnittsweise so weit in den Bereich des vorderen Förderwagens 2 hineinragen kann, dass der Zwischenraum 4 trotz des zuvor beschriebenen Herausschwenkens von der Abdeckung 6 vollständig abgedeckt ist und eine unerwünschte Bewegung des Quergurts 10 wie zuvor beschrieben verhindert wird.

Eine Erstreckung der Aussparung 34 in Förderrichtung und/oder ein Winkel 42 der Aussparung 34 kann vorteilhafterweise in Abhängigkeit eines zu erwartenden bzw. eines zugelassenen Horizontalkurvenwinkels 36 der Förderwagen 2 zur Förderrichtung dimensioniert sein.

### Bezugszeichenliste

- 1: Fördereinrichtung
- 2: Förderwagen
- 4: Zwischenraum
- 6: Abdeckung
- 8: Quergurtförderer
- 10: Quergurt
- 11: Rahmen
- 14: Umlenkrolle
- 16: Mittenlaufrolle
- 18: innere Laufrollen
- 19: Förderebene
- 20: erste Auflagerebene
- 21: Obertrum
- 22: Unterseite des Obertrums
- 23: Auflagefläche
- 24: zweite Auflagerebene
- 26: Anschlussabschnitt
- 28: Aufnahmeabschnitt
- 30: seitlicher Endabschnitt der Abdeckung
- 32: Eingreifabschnitt
- 34: Aussparung
- 36: Horizontalkurvenwinkel
- 38: Übergang
- 39: Rücksprung
- 42: Winkel

## Patentansprüche

1. Fördereinrichtung (1) mit mindestens zwei Förderwagen (2), die in Förderrichtung hintereinander angeordnet und derart voneinander beabstandet sind, dass ein Zwischenraum (4) zwischen den beiden Förderwagen (2) gebildet ist, wobei mindestens der eine Förderwagen (2) eine Abdeckung (6) und mindestens der andere Förderwagen (2) einen Quergurtförderer (8) zum Fördern von Fördergut in einer im Wesentlichen quer zur Förderrichtung ausgerichteten Querförderrichtung aufweist, wobei die Abdeckung (6) bei Geradeausfahrt und bei Kurvenfahrt der Förderwagen (2) den Zwischenraum (4) zwischen den Förderwagen (2) abdeckt, indem die Abdeckung (6) des einen Förderwagens (2) zumindest abschnittsweise unter einem Obertrum (21) des Quergurts (10) des anderen Förderwagens (2) angeordnet ist, **dadurch gekennzeichnet, dass** bei Kurvenfahrt die Abdeckung (6) zumindest abschnittsweise zwischen einer Unterseite (22) des Obertrums (21) und einer ersten Auflagerebene (20) eingreift, um den Quergurt (10) an einer Bewegung in Querförderrichtung zu hindern, wobei bei Geradeausfahrt die Abdeckung (6) zumindest abschnittsweise zwischen der ersten Auflagerebene (20) und einer zweiten Auflagerebene (24) eingreift, um die Bewegung des Quergurts (10) in Querförderrichtung zuzulassen, und wobei die erste Auflagerebene (20) und die zweite Auflagerebene (24) voneinander beabstandet sind.

2. Fördereinrichtung (1) nach Anspruch 1, wobei bei Kurvenfahrt der Förderwagen (2) ein freier Endabschnitt der Abdeckung (6) in eine Lücke zwischen zwei Laufrollen des Quergurtförderers (8) schwenkt und sich auf die Oberseite derjenigen der beiden Laufrollen, die weiter zum Kurvenäußeren angeordnet ist, in eine Position schiebt, in der die Abdeckung (6) zwischen der Unterseite (22) des Obertrums (21) und der ersten Auflagerebene (20) eingreift, um den Quergurt (10) an der Bewegung in Querförderrichtung zu hindern.

3. Fördereinrichtung (1) nach Anspruch 1 oder 2, wobei bei Kurvenfahrt der Förderwagen (2) ein kurvenaußenseitiger seitlicher Endabschnitt (30) der Abdeckung (6) in eine Lücke zwischen einer inneren Laufrolle (18) und der kurvenäußeren Umlenkrolle (14) des Quergurtförderers (8) schwenkt und sich auf die Oberseite der kurvenäußeren Umlenkrolle (14) in eine Position schiebt, in der die Abdeckung (6) zwischen der Unterseite (22) des Obertrums (21) und der ersten Auflagerebene (20) eingreift, um den Quergurt (10) an der Bewegung in Querförderrichtung zu hindern.

4. Fördereinrichtung (1) nach einem der vorherigen Ansprüche, wobei bei Geradeausfahrt der Förderwagen (2) die Abdeckung (6) im Bereich des Förderwagens (2) mit dem Quergurtförderer (8) auf der zweiten Auflagerebene (24) aufliegt.

5. Fördereinrichtung (1) nach einem der vorherigen Ansprüche, wobei die erste Auflagerebene (20) im Wesentlichen parallel zu der zweiten Auflagerebene (24) ausgerichtet ist.

6. Fördereinrichtung (1) nach einem der vorherigen Ansprüche, wobei die erste und die zweite Auflagerebene (24) etwa senkrecht zu ihrer Ausbreitungsrichtung voneinander beabstandet sind.

7. Fördereinrichtung (1) nach einem der vorherigen Ansprüche, wobei die erste Auflagerebene (20) als eine von jeweils einer obersten Mantellinie der Laufrollen des Quergurtförderers (8) definierten Förderebene (19) ausgebildet ist und die zweite Auflagerebene (24) als eine Auflagefläche (23) ausgebildet ist, die sich an innere Laufrollen (18) des Quergurtförderers (8) in deren Achsrichtung anschließt, wobei die inneren Laufrollen (18) zwischen Umlenkrollen (14) des Quergurtförderers (8) ausgebildet sind.

8. Fördereinrichtung (1) nach Anspruch 7, wobei die inneren Laufrollen (18) und die Auflagefläche (23) in axialer Richtung der Laufrollen gesehen zusammen eine etwa gleich große Erstreckung haben wie die axiale Erstreckung der Umlenkrollen (14).

9. Fördereinrichtung (1) nach Anspruch 7 oder 8, wobei zwischen den Umlenkrollen (14) des Quergurtförderers (8) eine Mittenlaufrolle (16) mit einer axialen Erstreckung angeordnet ist, die derjenigen der Umlenkrollen (14) entspricht, und wobei die inneren Laufrollen (18) zu beiden Seiten der Mittenlaufrolle (16) ausgebildet sind.

10. Abdeckung (6) zum Abdecken eines Zwischenraums (4) zwischen zwei Förderwagen (2) einer Fördereinrichtung (1), die in Förderrichtung hintereinander angeordnet und voneinander beabstandet sind, wobei mindestens der eine Förderwagen (2) die Abdeckung (6) und mindestens der andere Förderwagen (2) einen Quergurtförderer (8) zum Fördern von Fördergut in einer im Wesentlichen quer zur Förderrichtung ausgerichteten Querförderrichtung aufweist, und
wobei die Abdeckung (6) eine scheibenartige Form hat mit
- einem Anschlussabschnitt (26) zum Anschließen der Abdeckung (6) an einen sich quer zur Förderrichtung erstreckenden Aufnahmeabschnitt (28) des Förderwagens (2),
- sich an den Anschlussabschnitt (26) anschließenden seitlichen konvex ausgebildeten Endabschnitten (30), und
- einem Eingreifabschnitt (32) zum zumindest abschnittsweisen Eingreifen unter eine Unterseite (22) eines Obertrums (21) eines Quergurts (10) des Quergurtförderers (8),
wobei der Eingreifabschnitt (32) eine Aussparung (34) aufweist zum Verhindern des zumindest abschnittsweisen Eingreifens unter die Unterseite (22) des Obertrums (21) des Quergurts (10) im Bereich der Aussparung (34),
**dadurch gekennzeichnet, dass** ein Übergang (38) von dem seitlichen Endabschnitt (30) zu dem Eingreifabschnitt (32) als ein in radialer Richtung ausgebildeter Rücksprung (39) ausgebildet ist.

11. Abdeckung (6) nach Anspruch 10, wobei die Aussparung (34) etwa V-förmig ausgebildet ist.

## Claims

1. A conveying device (1) with at least two conveying carts (2) which in the conveying direction are arranged one behind the other and are spaced apart from each other such that an interspace (4) is formed between the two conveying carts (2), wherein at least the one conveying cart (2) comprises a covering means (6) and at least the other conveying cart (2) comprises a cross-belt conveyor (8) for conveying conveyed material in a transverse conveying direction oriented substantially transversely to the conveying direction, wherein the covering means (6), when the conveying carts (2) are travelling straight ahead and when they are negotiating curves, covers the interspace (4) between the conveying carts (2) in that the covering means (6) of the one conveying cart (2) is arranged at least in portions under an upper run (21) of the transverse belt (10) of the other conveying cart (2),
**characterized in**
**that** when negotiating curves the covering means (6) engages at least in portions between an underside (22) of the upper run (21) and a first support plane (20) in order to hinder the transverse belt (10) from moving in the transverse conveying direction, wherein when travelling straight ahead the covering means (6) engages at least in portions between the first support plane (20) and a second support plane (24) in order to permit the movement of the transverse belt (10) in the transverse conveying direction, and wherein the first support plane (20) and the second support plane (24) are spaced apart from each other.

2. A conveying device (1) according to Claim 1, wherein when the conveying carts (2) are negotiating curves a free end portion of the covering means (6) pivots into a gap between two track rollers of the cross-belt conveyor (8) and pushes itself onto the upper side of that one of the two track rollers which is arranged further to the outside of the curve, into a position in which the covering means (6) engages between the underside (22) of the upper run (21) and the first support plane (20) in order to hinder the transverse belt (10) from moving in the transverse conveying direction.

3. A conveying device (1) according to Claim 1 or 2, wherein when the conveying carts (2) are negotiating curves a lateral end portion (30) of the covering means (6) which is on the outside of the curve pivots into a gap between an inner track roller (18) and that deflecting roller (14) of the cross-belt conveyor (8) which is external to the curve and pushes itself onto the upper side of that deflecting roller (14) which is external to the curve, into a position in which the covering means (6) engages between the underside (22) of the upper run (21) and the first support plane (20) in order to hinder the transverse belt (10) from moving in the transverse conveying direction.

4. A conveying device (1) according to one of the preceding claims, wherein when the conveying carts (2) are travelling straight ahead the covering means (6) in the region of the conveying cart (2) with the cross-belt conveyor (8) rests on the second support plane (24).

5. A conveying device (1) according to one of the preceding claims, wherein the first support plane (20) is oriented substantially parallel to the second support plane (24).

6. A conveying device (1) according to one of the preceding claims, wherein the first and the second support plane (24) are spaced apart from each other approximately perpendicularly to their direction of extent.

7. A conveying device (1) according to one of the preceding claims, wherein the first support plane (20) is formed as a conveying plane (19) defined by in each case an uppermost barrel line of the track rollers of the cross-belt conveyor (8), and the second support plane (24) is formed as a supporting surface (23) which adjoins inner track rollers (18) of the cross-belt conveyor (8) in the axial direction thereof, wherein the inner track rollers (18) are formed between deflecting rollers (14) of the cross-belt conveyor (8).

8. A conveying device (1) according to Claim 7, wherein the inner track rollers (18) and the supporting surface (23), viewed in the axial direction of the track rollers, together have an extent of approximately the same size as the axial extent of the deflecting rollers (14).

9. A conveying device (1) according to Claim 7 or 8, wherein between the deflecting rollers (14) of the cross-belt conveyor (8) there is arranged a central track roller (16) with an axial extent which corresponds to that of the deflecting rollers (14), and wherein the inner track rollers (18) are formed on both sides of the central track roller (16).

10. A covering means (6) for covering an interspace (4) between two conveying carts (2) of a conveying device (1) which in the conveying direction are arranged one behind the other and are spaced apart from each other, wherein at least the one conveying cart (2) has the covering means (6) and at least the other conveying cart (2) has a cross-belt conveyor (8) for conveying conveyed material in a transverse conveying direction oriented substantially transversely to the conveying direction, and wherein the covering means (6) has a plate-like shape with
- a connection portion (26) for connecting the covering means (6) to a receiving portion of the conveying cart (2) which extends transversely to the conveying direction,
- lateral convexly formed end portions (30) which adjoin the connection portion (26), and
- an engagement portion (32) for engaging, at least in portions, under an underside (22) of an upper run (21) of a transverse belt (10) of the cross- belt conveyor (8),
wherein the engagement portion (32) comprises a cutout (34) for preventing the engagement, at least in portions, under the underside (22) of the upper run (21) of the transverse belt (10) in the region of the cutout (34),
**characterized in**
**that** a transition (38) from the lateral end portion (30) to the engagement portion (32) is designed as a set-back portion (39) formed in the radial direction.

11. A covering means (6) according to Claim 10, wherein the cutout (34) is approximately V-shaped.

## Revendications

1. Dispositif de transport (1) comportant au moins deux chariots de transport (2), qui sont disposés les uns derrière les autres dans la direction de transport et sont espacés les uns des autres de telle sorte qu'un espace intermédiaire (4) entre les deux chariots de transport (2) soit formé, dans lequel au moins l'un des chariots de transport (2) présente un carénage (6) et au moins l'autre chariot de transport (2) présente un transporteur à courroie transversale (8) servant au transport d'un produit à transporter dans une direction de transport transversale orientée sensiblement transversalement à la direction de transport, dans lequel le carénage (6) recouvre l'espace intermédiaire (4) entre les chariots de transport (2) lors d'un déplacement en ligne droite et lors d'un déplacement en virage des chariots de transport (2), par le fait que le carénage (6) de l'un des chariots de transport (2) est disposé au moins dans certaines parties en-dessous d'un brin supérieur (21) de la courroie transversale (10) de l'autre chariot de transport (2), **caractérisé en ce que**, lors d'un déplacement en virage, le carénage (6) vient en prise au moins dans certaines parties entre un côté inférieur (22) du brin supérieur (21) et un premier plan de support (20), afin d'empêcher un mouvement de la courroie transversale (10) dans la direction de transport transversale, dans lequel le carénage (6) vient en prise au moins dans certaines parties entre le premier plan de support (20) et un deuxième plan de support (24) lors d'un déplacement en ligne droite, afin d'autoriser le mouvement de la courroie transversale (10) dans la direction de transport transversale, et dans lequel le premier plan de support (20) et le deuxième plan de support (24) sont espacés l'un de l'autre.

2. Dispositif de transport (1) selon la revendication 1, dans lequel, lors d'un déplacement en virage des chariots de transport (2), une partie d'extrémité libre du carénage (6) pivote dans un interstice entre deux galets de roulement du transporteur à courroie transversale (8) et se glisse sur le côté supérieur de celui des deux galets de roulement qui est disposé plus loin vers l'extérieur du virage, dans une position dans laquelle le carénage (6) vient en prise entre le côté inférieur (22) du brin supérieur (21) et le premier plan de support (20), afin d'empêcher le mouvement de la courroie transversale (10) dans la direction de transport transversale.

3. Dispositif de transport (1) selon la revendication 1 ou 2, dans lequel, lors d'un déplacement en virage des chariots de transport (2), une partie d'extrémité latérale (30), située du côté de l'extérieur du virage, du carénage (6) pivote dans un interstice entre un galet de roulement intérieur (18) et le galet de renvoi (14), extérieur au virage, du transporteur à courroie transversale (8) et se glisse sur le côté supérieur du galet de renvoi (14) extérieur au virage, dans une position dans laquelle le carénage (6) vient en prise entre le côté inférieur (22) du brin supérieur (21) et le premier plan de support (20), afin d'empêcher le mouvement de la courroie transversale (10) dans la direction de transport transversale.

4. Dispositif de transport (1) selon l'une des revendications précédentes, dans lequel, lors d'un déplacement en ligne droite des chariots de transport (2), le carénage (6) dans la région du chariot de transport (2) comportant le transporteur à courroie transversale (8) repose sur le deuxième plan de support (24).

5. Dispositif de transport (1) selon l'une des revendications précédentes, dans lequel le premier plan de support (20) est orienté sensiblement parallèlement au deuxième plan de support (24).

6. Dispositif de transport (1) selon l'une des revendications précédentes, dans lequel le premier et le deuxième plan de support (24) sont espacés l'un de l'autre approximativement perpendiculairement à leur direction d'étendue.

7. Dispositif de transport (1) selon l'une des revendications précédentes, dans lequel le premier plan de support (20) est réalisé sous la forme d'un plan de transport (19) défini par respectivement une ligne d'enveloppe supérieure des galets de roulement du transporteur à courroie transversale (8) et le deuxième plan de support (24) est réalisé sous la forme d'une surface d'appui (23) qui se raccorde à des galets de roulement intérieurs (18) du transporteur à courroie transversale (8) dans sa direction axiale, les galets de roulement intérieurs (18) étant réalisé entre des galets de renvoi (14) du transporteur à courroie transversale (8).

8. Dispositif de transport (1) selon la revendication 7, les galets de roulement intérieurs (18) et la surface d'appui (23) ayant, vus dans la direction axiale des galets de roulement, ensemble une étendue approximativement de même taille que l'étendue axiale des galets de renvoi (14).

9. Dispositif de transport (1) selon la revendication 7 ou 8, dans lequel un galet de roulement central (16) présentant une étendue axiale est disposé entre les galets de renvoi (14) du transporteur à courroie transversale (8), laquelle étendue axiale correspond à celle des galets de renvoi (14), et dans lequel les galets de roulement intérieurs (18) sont réalisés des deux côtés du galet de roulement central (16).

10. Carénage (6) servant à recouvrir un espace intermédiaire (4) entre deux chariots de transport (2) d'un dispositif de transport (1), qui sont disposés les uns derrière les autres dans la direction de transport et sont espacés les uns des autres, dans lequel au moins l'un des chariots de transport (2) présente le carénage (6) et au moins l'autre chariot de transport (2) présente un transporteur à courroie transversale (8) servant au transport d'un produit à transporter dans une direction de transport transversale orientée sensiblement transversalement à la direction de transport, et
dans lequel le carénage (6) a une forme de type plaque comportant
- une partie de raccordement (26) servant au raccordement du carénage (6) à une partie de réception (28), s'étendant transversalement à la direction de transport, du chariot de transport (2),
- des parties d'extrémité (30) réalisées de manière convexe, latérales, se raccorde dans à la partie de raccordement (26), et
- une partie d'entrée en prise (32) pour l'entrée en prise, au moins dans certaines parties, en dessous d'un côté inférieur (22) d'un brin supérieur (21) d'une courroie transversale (10) du transporteur à courroie transversale (8), dans lequel la partie d'entrée en prise (32) présente un évidement (34) servant à empêcher l'entrée en prise, au moins dans certaines parties, en dessous du côté inférieur (22) du brin supérieur (21) de la courroie transversale (10) dans la région de l'évidement (34),
**caractérisé en ce qu'**une transition (38) de la partie d'extrémité latérale (30) vers la partie d'entrée en prise (32) est réalisée sous la forme d'un retrait (39) réalisé dans la direction radiale.

11. Carénage (6) selon la revendication 10, dans lequel l'évidement (34) est réalisé approximativement en forme de V.
